(19) Europäisches Patentamt
European Patent Office
Office européen des brevets

(11) EP 2 130 596 A2

(12) # EUROPEAN PATENT APPLICATION

(43) Date of publication:
**09.12.2009 Bulletin 2009/50**

(21) Application number: **08022572.5**

(22) Date of filing: **30.12.2008**

(51) Int Cl.:
***B01J 35/04*** *(2006.01)* ***B01J 29/00*** *(2006.01)*
***B01D 53/92*** *(2006.01)* ***F01N 3/00*** *(2006.01)*

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **20.05.2008 PCT/JP2008/059285**

(71) Applicant: **Ibiden Co., Ltd.**
**Ogaki-shi, Gifu 503-8604 (JP)**

(72) Inventors:
- **Ohno, Kazushige**
  **Gifu 501-0695 (JP)**
- **Kunieda, Masafumi**
  **Gifu 501-0695 (JP)**
- **Ido, Takahiko**
  **Gifu 501-0695 (JP)**

(74) Representative: **HOFFMANN EITLE**
**Patent- und Rechtsanwälte**
**Arabellastrasse 4**
**81925 München (DE)**

(54) **Honeycomb structure**

(57) A disclosed honeycomb structure includes a honeycomb unit containing inorganic particles and an inorganic binder and having partition walls extending along a longitudinal direction of the honeycomb unit to define plural through holes, and a coating layer defining the periphery of the honeycomb structure. The honeycomb structure is **characterized in that** the ratio of the specific heat capacity of the coating layer to the specific heat capacity of the honeycomb unit is 1.0 or less.

EP 2 130 596 A2

**Description**

## BACKGROUND OF THE INVENTION

1. Field of the Invention

The present invention relates to a honeycomb structure.

2. Description of the Related Art

Conventionally, an SCR (Selective Catalytic Reduction) system for reducing NOx to nitrogen and water using ammonia has been known as a system for converting exhaust gas of automobiles (see below).

$$4NO + 4NH_3 + O_2 \rightarrow 4N_2 + 6H_2O$$

$$6NO_2 + 8NH_3 \rightarrow 7N_2 + 12H_2O$$

$$NO + NO_2 + 2NH_3 \rightarrow 2N_2 + 3H_2O$$

Zeolite has been known as a material for absorbing ammonia in the SCR system.

PCT International Publication No. WO/06/137149 discloses a honeycomb structure, in which honeycomb units contain inorganic particles, and inorganic fibers and/or whiskers. The inorganic particles include at least one of alumina, silica, zirconia, titania, ceria, mullite, and zeolite.

However, if such a honeycomb structure containing inorganic particles includes a peripheral coating layer for increased strength, the light-off temperature is increased.

## SUMMARY OF THE INVENTION

In view of the forgoing, the present invention is directed toward providing a honeycomb structure including a peripheral coating layer and a capability of preventing an increase in the light-off temperature.

According to an aspect of the present invention, there is provided a honeycomb structure that includes a honeycomb unit containing inorganic particles and an inorganic binder and having partition walls extending along a longitudinal direction of the honeycomb unit to define plural through holes; and a coating layer defining the periphery of the honeycomb structure. The ratio of the specific heat capacity of the coating layer to the specific heat capacity of the honeycomb unit is 1.0 or less. Note that the specific heat capacity of the honeycomb unit indicates the heat capacity per apparent volume, and the specific heat capacity of the coating layer indicates the heat capacity per unit volume.

In the above-described honeycomb unit, the inorganic particles may preferably include at least one of alumina, silica, titania, zirconia, ceria, mullite, precursors thereof, and zeolite.

In the above-described honeycomb unit, the content of the zeolite per apparent volume may preferably be equal to or greater than 230 g/L but less than or equal to 270 g/L. Note that the apparent volume of the honeycomb unit indicates the volume including the through holes.

The above-described zeolite may preferably include at least one of β zeolite, Y zeolite, ferrierite, ZSM-5 zeolite, mordenite, faujasite, zeolite A, and zeolite L.

The above-described zeolite may preferably have a molar ratio of silica to alumina equal to or greater than 30 but less than or equal to 50.

The above-described zeolite may preferably be ion exchanged with at least one of Fe, Cu, Ni, Co, Zn, Mn, Ti, Ag and V.

The above-described zeolite may preferably contain secondary particles of particle diameter equal to or greater than 0.5 μm but less than or equal to 10 μm.

The above-described inorganic binder may preferably include solid content contained in at least one of alumina sol, silica sol, titanium sol, liquid glass, sepiolite, and attapulgite.

The above-described honeycomb unit may preferably further contain inorganic fibers. More preferably, the inorganic fibers may include at least one of alumina, silica, silicon carbide, silica alumina, glass, potassium titanate, and aluminum borate.

In the above-described honeycomb unit, the aperture ratio in the cross section perpendicular to the longitudinal direction may preferably be equal to or greater than 50% but less than or equal to 65%.

In the above-described honeycomb structure, a plurality of the above-described honeycomb units may preferably be bonded to each other by interposing adhesive layers between the plural honeycomb units.

According to an aspect of the present invention, it is possible to provide a honeycomb structure including a peripheral coating layer and a capability of preventing an increase in the light-off temperature.

## BRIEF DESCRIPTION OF THE DRAWINGS

FIG. 1 is a perspective view illustrating an example of a honeycomb structure according to an embodiment of the present invention;

FIG. 2A is a perspective view illustrating another honeycomb structure according to an embodiment of the present invention; and

FIG. 2B is a perspective view illustrating a honeycomb unit of the honeycomb structure of FIG. 2A.

FIG. 3 is a diagram for explaining a method of measuring a light-off temperature; and

FIG. 4 is a graph showing a relationship between a light-off temperature and a ratio of a specific heat capacity of a peripheral coating layer to a specific heat capacity of a honeycomb unit according to Examples and Comparative Examples of the present invention.

## DETAILED DESCRIPTION OF THE PREFERRED EMBODIMENT

Preferred embodiments of the present invention are described below with reference to the accompanying drawings.

FIG. 1 shows a honeycomb structure 10 according to an embodiment of the present invention. The honeycomb structure 10 includes a single honeycomb unit 11 that contains zeolite and inorganic binder and has plural through holes 12 that are aligned in the longitudinal direction and are separated from each other by partition walls. A peripheral coating layer 14 is formed on the peripheral surface of the honeycomb unit 11. A ratio of a specific heat capacity of the peripheral coating layer 14 to a specific heat capacity of the honeycomb unit 11 is 1.0 or less. This can prevent an increase in the light-off temperature. Note that the honeycomb structure 10 is applicable to an SCR system (e.g., a urea SCR system).

The ratio of the specific heat capacity of the peripheral coating layer 14 to the specific heat capacity of the honeycomb unit 11 may preferably be 0.7 or greater. If this ratio is less than 0.7, cracks may occur due to thermal stress between the honeycomb unit 11 and the peripheral coating layer 14.

The specific heat capacity of the honeycomb unit 11 may preferably be in the range of 335 - 375 J/L/K. If the specific heat capacity of the honeycomb unit 11 is less than 335 J/L/K, the temperature of the honeycomb unit 11 may rise to the deactivation temperature of zeolite. On the other hand, if the specific heat capacity is greater than 375 J/L/K, the light-off temperature may be increased.

The specific heat capacity of the peripheral coating layer 14 may preferably be in the range of 270 - 370 J/L/K. If the specific heat capacity of the peripheral coating layer 14 is less than 270 J/L/K, the temperature of the peripheral coating layer 14 may rise to the deactivation temperature of zeolite. On the other hand, if the specific heat capacity is greater than 370 J/L/K, the light-off temperature may be increased.

The content of zeolite per apparent volume in the honeycomb unit 11 may preferably be in the range of 230 - 270 g/L. If the content of zeolite per apparent volume in the honeycomb unit 11 is less than 230 g/L, the apparent volume of the honeycomb unit 11 may need to be increased in order to achieve sufficient NOx conversion efficiency. On the other hand, if the content of zeolite per apparent volume is greater than 270 g/L, the honeycomb unit 11 may have insufficient strength.

Non-exclusive examples of zeolite may include β zeolite, ZSM-5 zeolite, mordenite, faujasite, zeolite A, and zeolite L. These may be used alone or in combination of two or more.

Zeolite may preferably have a molar ratio of silica to alumina in the range of 30 - 50.

Zeolite may be ion exchanged in order to improve the ammonia absorption capacity. Non-exclusive examples of cationic species with which zeolite is ion exchanged may include Fe, Cu, Ni, Co, Zn, Mn, Ti, Ag, and V. These may be used alone or in combination of two or more. The ion exchange amount is preferably in the range of 1.0 - 10.0 wt%, and more preferably in the range of 1.0 - 5.0 wt%. If the ion exchange amount is less than 1.0 wt%, the ammonia absorption capacity is not sufficiently improved by ion exchange. On the other hand, if the ion exchange amount is greater than 10.0 wt%, the structure may become instable when heat is applied. For ion exchange of zeolite, zeolite may be immersed in a solution containing cations.

Zeolite may preferably contain secondary particles. The average particle diameter of the secondary particles of zeolite may preferably be in the range of 0.5 - 10 μm. If the average particle diameter of the secondary particles of zeolite is less than 0.5 μm, a large amount of inorganic binder needs to be added, which may make extrusion molding of the honeycomb unit difficult. On the other hand, if the average particle diameter is greater than 10 μm, the specific surface area of zeolite in the honeycomb unit is reduced, which may result in reduced NOx conversion efficiency.

In order to improve the strength, the honeycomb unit 11 may further include inorganic particles excluding zeolite (hereinafter referred to as "non-zeolite inorganic particles"). Non-exclusive examples of non-zeolite inorganic particles may include alumina, silica, titania, zirconia, ceria, mullite, and precursors of these materials. These may be used alone or in combination of two or more. Alumina and zirconia are preferable among them.

The average particle diameter of the non-zeolite inorganic particles may preferably be in the range of 0.5 - 10 μm. If the average particle diameter is less than 0.5 μm, a large amount of inorganic binder needs to be added, which may make extrusion molding of the honeycomb unit difficult. On the other hand, if the average particle diameter is greater than 10 μm, a sufficient effect of increasing the strength of the honeycomb unit 11 may not be obtained. The non-zeolite inorganic particles may contain secondary particles.

The ratio of the average diameter of the secondary particles of the non-zeolite inorganic particles to the average diameter of the secondary particles of zeolite is preferably 1 or less, and more preferably in the range of 0.1 - 1. If this ratio is greater than 1, a sufficient effect of increasing the strength of the honeycomb unit 11 may not be obtained.

The content of the non-zeolite inorganic particles in the honeycomb unit 11 is preferably in the range of 3 - 30 wt%, and more preferably in the range of 5 - 20 wt%. If the content is less than 3 wt%, the strength of the honeycomb unit 11 may be reduced. On the other hand, if the content is greater than 30 wt%, the content of zeolite in the honeycomb unit 11 is reduced, which may result in reduced NOx conversion efficiency.

Non-exclusive examples of an inorganic binder include solid content contained in alumina sol, silica sol, titanium sol, liquid glass, sepiolite, and attapulgite. These may be used alone or in combination of two of more.

The content of the inorganic binder in the honeycomb unit 11 is preferably in the range of 5 - 30 wt%, and more preferably in the range of 10 - 20 wt%. The inorganic binder content of less than 5 wt% may result in reduced strength of the honeycomb unit 11, while the inorganic binder content of greater than 30 wt% may make molding of the honeycomb unit difficult.

The honeycomb unit 11 may preferably further include inorganic fibers for increased strength.

The inorganic fibers may be any kind of inorganic fiber that can increase the strength of the honeycomb unit 11. Non-exclusive examples of inorganic fibers may include alumina, silica, silicon carbide, silica alumina, glass, potassium titanate, and aluminum borate. These may be used alone or in combination of two or more.

The aspect ratio of the inorganic fibers is preferably in the range of 2 - 1,000, more preferably in the range of 5 - 800, and still more preferably in the range of 10 - 500. If the aspect ratio is less than 2, the effect of increasing the strength of the honeycomb unit 11 may be reduced. On the other hand, if the aspect ratio is greater than 1,000, clogging or the like may occur in a die during molding using an extrusion molding process or the like. Further, inorganic fibers may be broken during the molding process, so that the effect of increasing the strength of the honeycomb unit 11 may be reduced.

The content of the inorganic fibers in the honeycomb unit 11 is preferably in the range of 3 - 50 wt%, more preferably in the range of 3 - 30 wt%, and still more preferably in the range of 5 - 20 wt%. If the content of the inorganic fibers is less than 3 wt%, the effect of increasing the strength of the honeycomb unit 11 may be reduced. On the other hand, if the content is greater than 50 wt%, the content of zeolite in the honeycomb unit 11 is reduced, which may result in reduced NOx conversion efficiency.

In the honeycomb unit 11, the aperture ratio in the cross section perpendicular to the longitudinal direction may preferably be in the range of 50 - 65%. The aperture ratio of less than 50% may result in inefficient use of zeolite in NOx conversion, while the aperture ratio of greater than 65% may result in insufficient strength of the honeycomb unit 11.

In the honeycomb unit 11, the density of the through holes 12 in the cross section perpendicular to the longitudinal direction is preferably in the range of 15.5 - 124 holes/cm$^2$, and more preferably in the range of 31 - 93 holes/cm$^2$. If the density of the through holes 12 is less than 15.5 holes/cm$^2$, it is difficult to bring exhaust gas and zeolite into contact with each other, and hence the NOx conversion efficiency of the honeycomb unit 11 may be reduced. On the other hand, if the density of the through holes 12 is greater than 124 holes/cm$^2$, pressure loss of the honeycomb unit 11 may be increased.

The thickness of the partition walls between the through holes 12 of the honeycomb unit 11 is preferably in the range of 0.10 - 0.50 mm, and more preferably in the range of 0.15 - 0.35 mm. If the partition wall thickness is less than 0.10 mm, the strength of the honeycomb unit 11 may be reduced. On the other hand, if the partition wall thickness is greater than 0.50 mm, it is difficult for exhaust gas to penetrate into the partition walls, which may result in inefficient use of zeolite in NOx conversion.

The thickness of the peripheral coating layer 14 may preferably be in the range of 0.1 - 2 mm. If the thickness of the peripheral coating layer 14 is less than 0.1 mm, a sufficient effect of increasing the strength of the honeycomb unit 11 may not be obtained. On the other hand, if the thickness of the peripheral coating layer 14 is greater than 2 mm, the content of zeolite per unit volume in the honeycomb structure 10 is reduced, and hence the NOx conversion efficiency of the honeycomb structure 10 may be reduced.

Although the honeycomb structure 10 of the illustrated embodiment of the present invention has a cylindrical shape, the honeycomb structure 10 may have any shape such as a rectangular pillar shape and a cylindroid shape.

Although the through holes 12 of the illustrated embodiment of the present invention have a rectangular pillar shape, the through holes 12 may have any shape such as a triangular pillar shape and a hexagonal pillar shape.

An example of a manufacturing method of the honeycomb structure 10 is described below. First, a raw material paste, which contains zeolite and inorganic binder and, if necessary, further contains non-zeolite inorganic particles and inorganic fibers, is molded using an extrusion molding process or the like to form a raw honeycomb molded body having plural through holes that are aligned in the longitudinal direction and are separated from each other by partition walls. Thus, a honeycomb unit 11 having sufficient strength can be obtained even if fired at low temperatures.

Examples of an inorganic binder contained in the raw material paste may include alumina sol, silica sol, titanium sol, liquid glass, sepiolite, and attapulgite. These may be used alone or in combination of two of more.

An organic binder, a dispersion solvent, and a molding assisting agent and the like may be added to the raw material paste if necessary.

Non-exclusive examples of an organic binder may include methylcellulose, carboxymethylcellulose, hydroxyethylcellulose, polyethyleneglycol, phenol resin, and epoxy resin. These may be used alone or in combination of two or more. The content of the organic binder may preferably be in the range of 1 - 10% of the total weight of zeolite, the non-zeolite inorganic particles, the inorganic fibers, and the inorganic binder.

Non-exclusive examples of a dispersion solvent may include organic solvent, such as water and benzene, and alcohol, such as methanol.

These may be used alone or in combination of two or more.

Non-exclusive examples of a molding assisting agent may include ethylene glycol, dextrin, fatty acid, fatty acid soap, and polyalcohol. These may be used alone or in combination of two or more.

When preparing the raw material paste, the components of the raw material paste are preferably mixed and kneaded. These components may be mixed using a mixer, an attritor or the like, and be kneaded using a kneader or the like.

The resulting honeycomb molded body is dried using a drying apparatus such as a microwave drying apparatus, a hot air drying apparatus, a dielectric drying apparatus, a low-pressure drying apparatus, a vacuum drying apparatus, and a freezing drying apparatus.

Then, the resulting honeycomb molded body is degreased. Although degreasing conditions may be suitably selected according to the kind and amount of organic substances contained in the molded body, degreasing is preferably performed at 400 °C for 2 hours.

Then, the resulting honeycomb molded body is fired to obtain a cylindrical honeycomb unit 11. The firing temperature is preferably in the range of 600 - 1,200°C, and more preferably in the range of 600 - 1,000 °C. The firing temperature of less than 600 °C prevents progress of firing and may result in reduced strength of the honeycomb unit 11. The firing temperature of greater than 1,200 °C causes excessive progress of firing and may result in reduced reaction sites of zeolite in the honeycomb unit 11.

Then, a peripheral coating paste is applied onto the peripheral surface of the cylindrical honeycomb unit 11, and the peripheral coating paste is dried and solidified. Non-exclusive examples of a peripheral coating paste may include a mixture of an inorganic binder and inorganic particles, a mixture of an inorganic binder and inorganic fibers, and a mixture of an inorganic binder, inorganic particles, and inorganic fibers.

The peripheral coating paste may contain an organic binder. Non-exclusive examples of an organic binder may include polyvinyl alcohol, methylcellulose, ethylcellulose, and carboxymethylcellulose. These may be used alone or in combination of two or more.

The peripheral coating paste may contain a pore-forming agent. Non-exclusive examples of a pore-forming agent may include balloons, which are hollow microspheres of oxide ceramic, spherical acrylic particles, and graphite. These may be used alone or in combination of two or more. Examples of balloons may include alumina balloons, glass micro-balloons, shirasu balloons, fly ash balloons (FA balloons), and mullite balloons.

In an embodiment of the present invention, the specific heat capacity of the peripheral coating layer 14 may be adjusted using the organic binder and the pore-forming agent.

The assembly of the honeycomb units 11 with the peripheral coating paste applied thereon is dried and solidified to obtain a cylindrical honeycomb structure 10. In the case where the peripheral coating paste contains an organic binder, degreasing is preferably performed. Although degreasing conditions may be suitably selected according to the kind and amount of organic substances, degreasing is preferably performed at 700 °C for 20 minutes.

FIGS. 2A and 2B show another honeycomb structure 20 according to an embodiment of the present invention. The honeycomb structure 20 is the same as the honeycomb structure 10 except that plural honeycomb units 11, each having plural through holes 12 that are aligned in the longitudinal direction and are separated from each other by partition walls, are bonded to each other by interposing adhesive layers 13.

The area of the cross section of the honeycomb unit 11 perpendicular to the longitudinal direction may preferably be in the range of 5 - 50 $cm^2$. A cross-sectional area of less than 5 $cm^2$ may result in reduced specific surface area of the honeycomb structure 10 and increased pressure loss, while a cross-sectional area of greater than 50 $cm^2$ may result in insufficient strength against thermal stress in the honeycomb unit 11.

The thickness of the adhesive layers 13 bonding the honeycomb units 11 to each other may preferably be in the range of 0.5 - 2 mm. The adhesive layers 13 having a thickness of less than 0.5 mm may result in insufficient adhesive strength. On the other hand, the adhesive layers 13 having a thickness of greater than 2 mm may result in reduced specific surface area of the honeycomb structure 10 and increased pressure loss.

Although the honeycomb unit 11 of the illustrated embodiment of the present invention has a square pillar shape, the honeycomb unit 11 may have any shape, preferably shapes such as a hexagonal pillar shape that allow easy bonding of the honeycomb units 11.

An example of a manufacturing method of the honeycomb structure 20 is described below. Square-pillar-shaped honeycomb units 11 are manufactured in the same manner as the honeycomb structure 10. Then, an adhesive paste is applied onto the peripheral surfaces of the honeycomb units 11 to bond the honeycomb units 11 to each other. The adhesive paste is dried and solidified to form an assembly of the honeycomb units 11. After forming the assembly of the honeycomb units 11, the assembly may be cut into a cylindrical shape and be polished. Alternatively, honeycomb units 11 molded in sector shapes or square shapes in cross section may be bonded to each other to form a cylindrical assembly of the honeycomb units 11.

Non-exclusive examples of an adhesive paste may include a mixture of an inorganic binder and inorganic particles, a mixture of an inorganic binder and inorganic fibers, and a mixture of an inorganic binder, inorganic particles, and inorganic fibers.

The adhesive paste may contain an organic binder. Non-exclusive examples of an organic binder may include polyvinyl alcohol, methylcellulose, ethylcellulose, and carboxymethylcellulose. These may be used alone or in combination of two or more.

Then, a peripheral coating paste is applied onto the peripheral surface of the cylindrical assembly of the honeycomb units 11. The peripheral coating paste may contain the same materials as the materials of the adhesive paste or may contain different materials. The peripheral coating paste may have the same composition as the composition of the adhesive paste.

The peripheral coating paste may contain a pore-forming agent. Non-exclusive examples of a pore-forming agent may include balloons, which are hollow microspheres of oxide ceramic, spherical acrylic particles, and graphite. These may be used alone or in combination of two or more. Examples of balloons may include alumina balloons, glass micro-balloons, shirasu balloons, fly ash balloons (FA balloons), and mullite balloons.

The assembly of the honeycomb units 11 with the peripheral coating paste applied thereon is dried and solidified to obtain a cylindrical honeycomb structure 20. In the case where the adhesive paste and/or the peripheral coating paste contains an organic binder, degreasing is preferably performed. Although degreasing conditions may be suitably selected according to the kind and amount of organic substances, degreasing is preferably performed at 700 °C for 20 minutes.

Note that the honeycomb structures 10 and 20 may be manufactured in the following way. A honeycomb structure is formed using a raw material paste containing non-ion exchanged zeolite and then is immersed in a solution containing cations for ion exchange of zeolite.

Although the honeycomb structure containing zeolite as inorganic particles and the honeycomb structure containing both zeolite and non-zeolite inorganic particles as inorganic particles are described above, the same effects may be achieved by a honeycomb structure containing only non-zeolite inorganic particles.

(Examples)

<Example 1>

First, 2,600 g of β zeolite having 3 wt% ion exchanged with Fe, 2 μm average particle diameter, a silica/alumina ratio of 40, and 110 $m^2/g$ specific surface area; 2,600 g of alumina sol of 20 wt% solid content as a component containing an inorganic binder; 780 g of alumina fibers of 6 μm average fiber diameter and 100 μm average fiber length as inorganic fibers; and 410 g of methylcellulose as an organic binder were mixed and kneaded to obtain a raw material paste 1. Note that zeolite particles were immersed in an iron nitrate solution to be ion exchanged with Fe. The ion exchange amount of zeolite was measured by IPC emission analysis using ICPS-8100 (manufactured by Shimadzu Corporation). Then, the raw material paste 1 was molded by extrusion molding using an extruder to obtain a raw cylindrical honeycomb molded body. The honeycomb molded body was dried using a microwave drying apparatus and a hot air drying apparatus, and was then degreased at 400 °C for 5 hours. Then, the honeycomb molded body was fired at 700 °C for 5 hours to obtain a cylindrical honeycomb unit 11 of 143 mm diameter and 150 mm length. The obtained honeycomb unit 11 has a 60% aperture ratio in the cross section perpendicular to the longitudinal direction, a through hole density of 78 through holes/$cm^2$, 0.25 mm partition wall thickness, and 250 g/L zeolite content per apparent volume.

The aperture ratio was found by calculating the area of the through holes in an area of 10 cm by 10 cm of the honeycomb unit 11 using an optical microscope. The density of the through holes was found by counting the number of the through holes in an area of 10 cm by 10 cm of the honeycomb unit 11 using an optical microscope. The partition wall thickness of the honeycomb unit 11 is an average value of the partition wall thicknesses at several locations (five locations) measured using an optical microscope.

Next, 29 parts by weight of γ alumina of 2 μm average particle diameter as inorganic particles, 7 parts by weight of alumina fibers of 6 μm average fiber diameter and 100 μm average fiber length as inorganic fibers, 34 parts by weight of alumina sol of 20 wt% solid content as a component containing an inorganic binder, 5 parts by weight of methylcellulose as an organic binder, and 25 parts by weight of water were mixed and kneaded to obtain a peripheral coating paste 1.

Then, the peripheral coating paste 1 was applied onto the peripheral surface of the honeycomb unit 11 to form a peripheral coating layer 14 of 0.4 mm thickness. After that, the honeycomb unit 11 was dried and solidified at 120 °C by using a microwave drying apparatus and a hot air drying apparatus, and was then degreased at 400 °C for 2 hours to obtain a honeycomb structure 10. A specific heat capacity A of the honeycomb unit 11 and a specific heat capacity B of the peripheral coating layer 14 were 335 J/L/K and 330 J/L/K, respectively (see Table 1).

The specific heat capacities A and B were measured using a differential scanning calorimeter EVO/DSC 8230 (manufactured by Rigaku Corporation).

<Example 2>

Twenty four parts by weight of γ alumina of 2 μm average particle diameter, 7 parts by weight of alumina fibers of 6 μm average fiber diameter and 100 μm average fiber length, 34 parts by weight of alumina sol of 20 wt% solid content, 5 parts by weight of acrylic resin of 0.4 μm average particle diameter as a pore-forming agent , 5 parts by weight of methylcellulose, and 25 parts by weight of water were mixed and kneaded to obtain a peripheral coating paste 2.

A honeycomb structure 10 was manufactured in the same manner as in Example 1 except that the peripheral coating paste 2 was used instead of the peripheral coating paste 1 (see Table 1).

<Example 3>

Nineteen parts by weight of γ alumina of 2 μm average particle diameter, 7 parts by weight of alumina fibers of 6 μm average fiber diameter and 100 μm average fiber length, 34 parts by weight of alumina sol of 20 wt% solid content, 10 parts by weight of acrylic resin of 0.4 μm average particle diameter, 5 parts by weight of methylcellulose, and 25 parts by weight of water were mixed and kneaded to obtain a peripheral coating paste 3.

A honeycomb structure 10 was manufactured in the same manner as in Example 1 except that the peripheral coating paste 3 was used instead of the peripheral coating paste 1 (see Table 1).

<Example 4>

First, 2,250 g of β zeolite having 3 wt% ion exchanged with Fe, 2 μm average particle diameter, a silica/alumina ratio of 40, and 110 $m^2$/g specific surface area; 2,600 g of alumina sol of 20 wt% solid content; 550 g of γ alumina of 2 μm average particle diameter as non-zeolite inorganic particles; 780 g of alumina fibers of 6 μm average fiber diameter and 100 μm average fiber length; and 410 g of methylcellulose were mixed and kneaded to obtain a raw material paste 2. Then, the raw material paste 2 was molded by extrusion molding using an extruder to obtain a raw cylindrical honeycomb molded body. The honeycomb molded body was dried using a microwave drying apparatus and a hot air drying apparatus, and was then degreased at 400 °C for 5 hours. Then, the honeycomb molded body was fired at 700 °C for 5 hours to obtain a cylindrical honeycomb unit 11 of 143 mm diameter and 150 mm length. The obtained honeycomb unit 11 has a 60% aperture ratio in the cross section perpendicular to the longitudinal direction, a through hole density of 78 through holes/$cm^2$, 0.25 mm partition wall thickness, and 250 g/L zeolite content per apparent volume.

Next, 29 parts by weight of γ alumina of 2 μm average particle diameter, 7 parts by weight of alumina fibers of 6 μm average fiber diameter and 100 μm average fiber length, 13 parts by weight of silica sol of 20 wt% solid content, 21 parts by weight of alumina sol of 20 wt% solid content, 5 parts by weight of methylcellulose, and 25 parts by weight of water were mixed and kneaded to obtain a peripheral coating paste 4.

Then, the peripheral coating paste 4 was applied onto the peripheral surface of the honeycomb unit 11 to form a peripheral coating layer 14 of 0.4 mm thickness. After that, the honeycomb unit 11 was dried and solidified at 120 °C by using a microwave drying apparatus and a hot air drying apparatus, and was then degreased at 400 °C for 2 hours to obtain a cylindrical honeycomb structure 10 (see Table 1).

<Example 5>

A honeycomb structure 10 was obtained in the same manner as in Example 4 except that the peripheral coating paste 1 was used instead of the peripheral coating paste 4 (see Table 1).

<Example 6>

A honeycomb structure 10 was manufactured in the same manner as in Example 4 except that the peripheral coating paste 2 was used instead of the peripheral coating paste 4 (see Table 1).

<Example 7>

A honeycomb structure 10 was manufactured in the same manner as in Example 4 except that the peripheral coating paste 3 was used instead of the peripheral coating paste 4 (see Table 1).

<Comparative Example 1>

Five parts by weight of γ alumina of 2 μm average particle diameter, 7 parts by weight of silica-alumina fibers of 10 μm average fiber diameter and 100 μm average fiber length, 34 parts by weight of silica sol of 20 wt% solid content, 5 parts by weight of methylcellulose, and 25 parts by weight of water were mixed and kneaded to obtain a peripheral coating paste 5.

A honeycomb structure 10 was manufactured in the same manner as in Example 1 except that the peripheral coating paste 5 was used instead of the peripheral coating paste 1 (see Table 1).

<Comparative Example 2>

A honeycomb structure 10 was manufactured in the same manner as in Example 4 except that the peripheral coating paste 5 was used instead of the peripheral coating paste 4 (see Table 1).

<Comparative Example 3>

A honeycomb structure 10 was manufactured in the same manner as in Example 1 except that the peripheral coating paste 4 was used instead of the peripheral coating paste 1 (see Table 1).

<Table 1>

| | RAW MATERIAL PASTE | PERIPHERAL COATING PASTE | SPECIFIC HEAT CAPACITY A OF HONEYCOMB UNIT [J / L / K] | SPECIFIC HEAT CAPACITY B OF PERIPHERAL COATING LAYER [J / L /K] | B / A | LIGHT-OFF TEMPERATURE [°C] |
|---|---|---|---|---|---|---|
| EXAMPLE 1 | 1 | 1 | 335 | 330 | 0.99 | 158 |
| EXAMPLE 2 | 1 | 2 | 335 | 305 | 0.91 | 155 |
| EXAMPLE 3 | 1 | 3 | 335 | 273 | 0.81 | 145 |
| EXAMPLE 4 | 2 | 4 | 370 | 365 | 0.99 | 158 |
| EXAMPLE 5 | 2 | 1 | 370 | 330 | 0.89 | 153 |
| EXAMPLE 6 | 2 | 2 | 370 | 305 | 0.82 | 148 |
| EXAMPLE 7 | 2 | 3 | 370 | 273 | 0.74 | 140 |
| COMPARATIVE EXAMPLE 1 | 1 | 5 | 335 | 500 | 1.49 | 195 |
| COMPARATIVE EXAMPLE 2 | 2 | 5 | 370 | 500 | 1.35 | 185 |
| COMPARATIVE EXAMPLE 3 | 1 | 4 | 335 | 365 | 1.09 | 175 |

(Measurement of Light-off temperature)

As shown in FIG. 3, a diesel engine (1.6 L direct injection engine), which is serially connected to a diesel oxidation catalyst (DOC) 200, a diesel particulate filter (DPF) 300, an SCR 400, and a diesel oxidation catalyst (DOC) 500 through exhaust pipes, was driven under the conditions of an engine speed of 300 rpm and a torque of 170 N·m, and an aqueous urea solution was injected to the exhaust pipe immediately before the SCR 400. The inflow of nitric oxide (NO) and nitrogen dioxide ($NO_2$) to the SCR 400 and the outflow from the SCR 400 were measured using MEXA-1170NX (manufactured by HORIBA Ltd.) to measure the NOx conversion efficiency (%) represented by the expression:

$$(\text{inflow of NOx} - \text{outflow of NOx})/(\text{inflow of NOx}) \times 100$$

(detection limit: 0.1 ppm). Then, the temperature (light-off temperature) which makes the NOx conversion efficiency 50% was measured. The light-off temperature was measured at the exhaust pipe immediately before the SCR 400. As the DOC 200, the DPF 300, the SCR 400, and the DOC 500, a honeycomb unit (commercialized product) of 143.8 mm diameter and 7.35 mm length, a honeycomb structure (commercialized product) of 143.8 mm diameter and 152.4 mm length, one of the honeycomb structures of Examples 1 - 7 and Comparative Example 1 - 3, and a honeycomb structure (commercialized product) of 143.8 mm diameter and 50.8 mm length, each wound with a sealing material (mat) and placed in a metal casing (shell), were used, respectively. The measurement results are shown in Table 1.

Further, FIG. 4 shows a relationship between the light-off temperature and a ratio B/A of the specific heat capacity B of the peripheral coating layer to the specific heat capacity A of the honeycomb unit according to Examples and Comparative Examples. As shown in FIG. 4, the honeycomb structures of Examples 1 - 7 have lower light-off temperatures than the honeycomb structures of Comparative Examples 1 - 3.

These results show that when the ratio of the specific heat capacity of the peripheral coating layer 14 to the specific heat capacity of the honeycomb unit 11 is 1.0 or less, it is possible to prevent an increase in the light-off temperature.

## Claims

**1.** A honeycomb structure, comprising:

a honeycomb unit containing inorganic particles and an inorganic binder and having partition walls extending along a longitudinal direction of the honeycomb unit to define plural through holes; and
a coating layer defining a periphery of the honeycomb structure;

**characterized in that** a ratio of a specific heat capacity of the coating layer to a specific heat capacity of the honeycomb unit is 1.0 or less.

**2.** The honeycomb structure as claimed in claim 1, **characterized in that** the inorganic particles include at least one of alumina, silica, titania, zirconia, ceria, mullite, precursors thereof, and zeolite.

**3.** The honeycomb structure as claimed in claim 2, **characterized in that** a content of the zeolite per apparent volume in the honeycomb unit is equal to or greater than 230 g/L but less than or equal to 270 g/L.

**4.** The honeycomb structure as claimed in claim 2 or 3, **characterized in that** the zeolite includes at least one of β zeolite, Y zeolite, ferrierite, ZSM-5 zeolite, mordenite, faujasite, zeolite A, and zeolite L.

**5.** The honeycomb structure as claimed in any one of claims 2 through 4, **characterized in that** the zeolite has a molar ratio of silica to alumina equal to or greater than 30 but less than or equal to 50.

**6.** The honeycomb structure as claimed in any one of claims 2 through 5, **characterized in that** the zeolite is ion exchanged with at least one of Fe, Cu, Ni, Co, Zn, Mn, Ti, Ag and V.

**7.** The honeycomb structure as claimed in any one of claims 2 through 6, **characterized in that** the zeolite contains secondary particles of particle diameter equal to or greater than 0.5 μm but less than or equal to 10 μm.

**8.** The honeycomb structure as claimed in any one of claims 1 through 7, **characterized in that** the inorganic binder includes solid content contained in at least one of alumina sol, silica sol, titanium sol, liquid glass, sepiolite, and attapulgite.

**9.** The honeycomb structure as claimed in any one of claims 1 through 8, **characterized in that** the honeycomb unit further contains inorganic fibers.

**10.** The honeycomb structure as claimed in claim 9, **characterized in that** the inorganic fibers include at least one of alumina, silica, silicon carbide, silica alumina, glass, potassium titanate, and aluminum borate.

**11.** The honeycomb structure as claimed in any one of claims 1 through 10, **characterized in that** an aperture ratio in a cross section perpendicular to the longitudinal direction in the honeycomb unit is equal to or greater than 50% but less than or equal to 65%.

**12.** The honeycomb structure as claimed in any one of claims 1 through 11, **characterized in that** a plurality of the honeycomb units are bonded to each other by interposing adhesive layers between the plural honeycomb units.

FIG.1

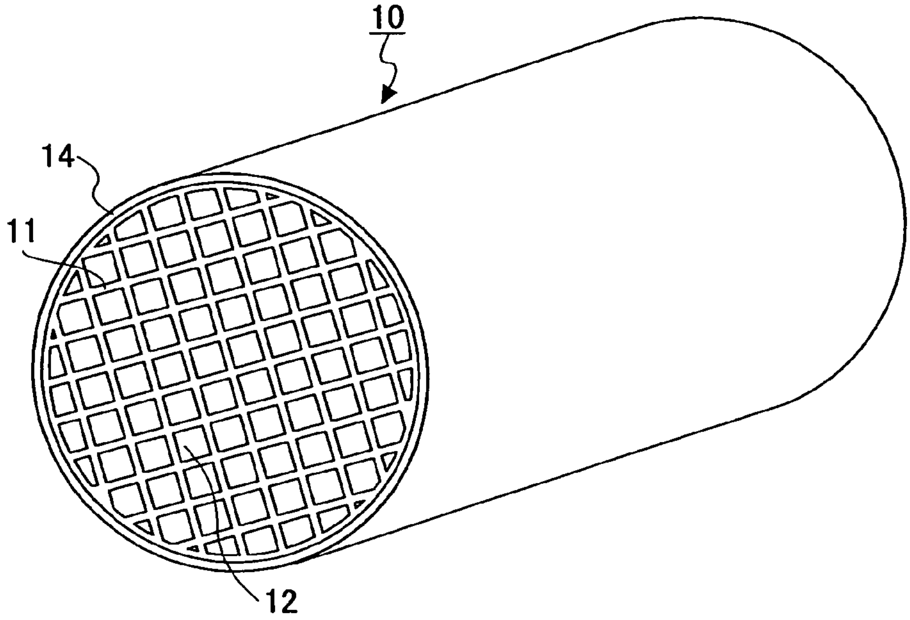


FIG.2A

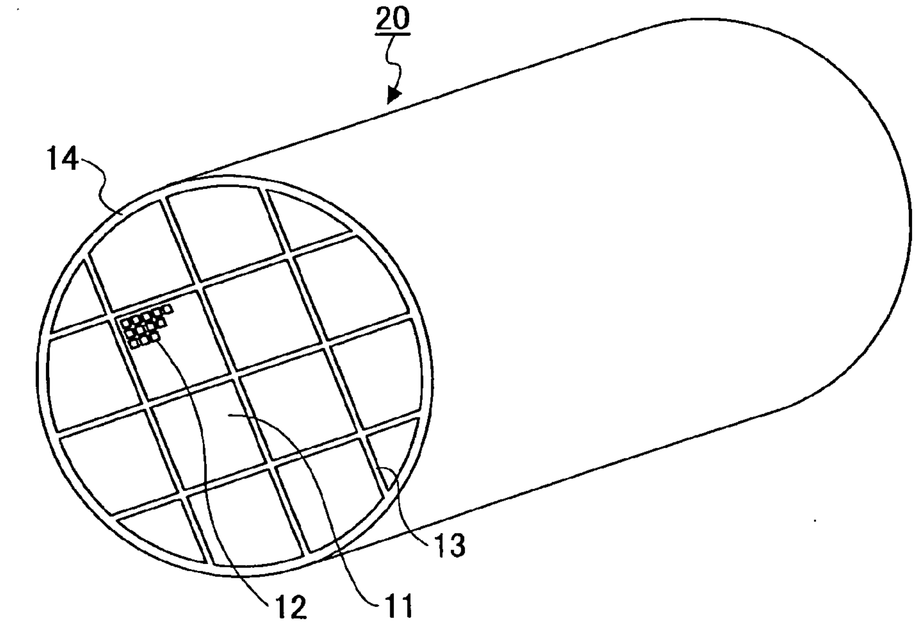

FIG.2B

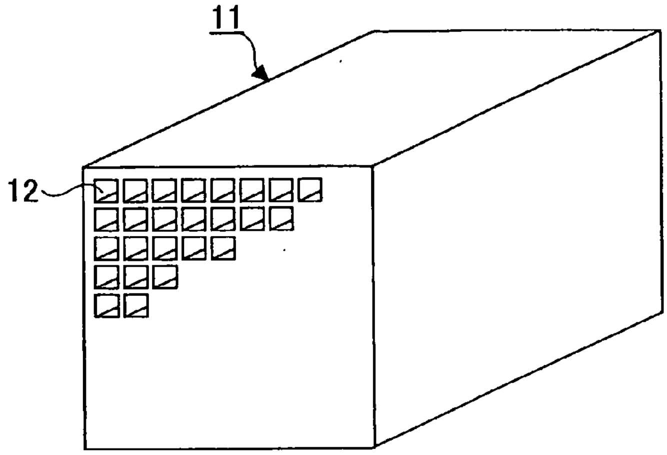
11
12

FIG.3

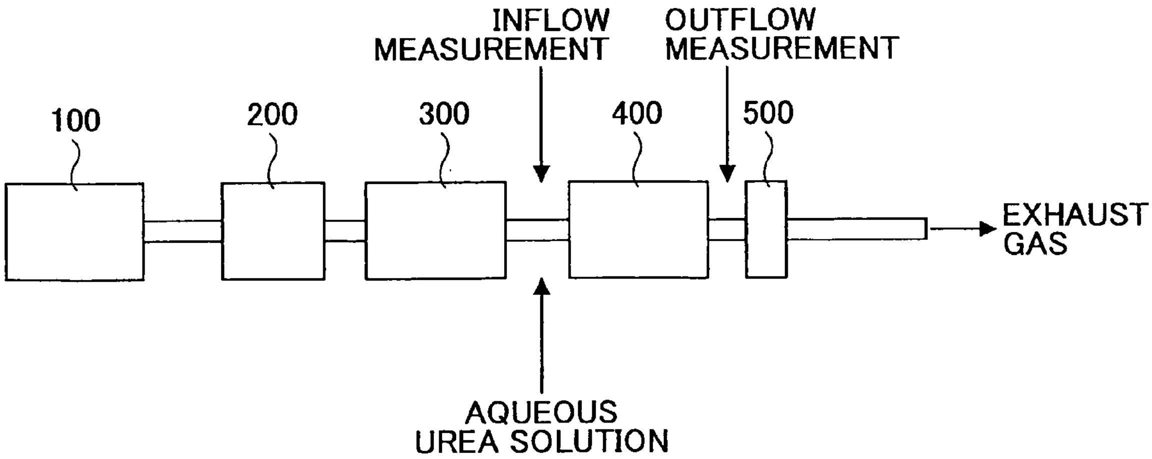
INFLOW
MEASUREMENT
OUTFLOW
MEASUREMENT
100
200
300
400
500
EXHAUST
GAS
AQUEOUS
UREA SOLUTION

FIG.4

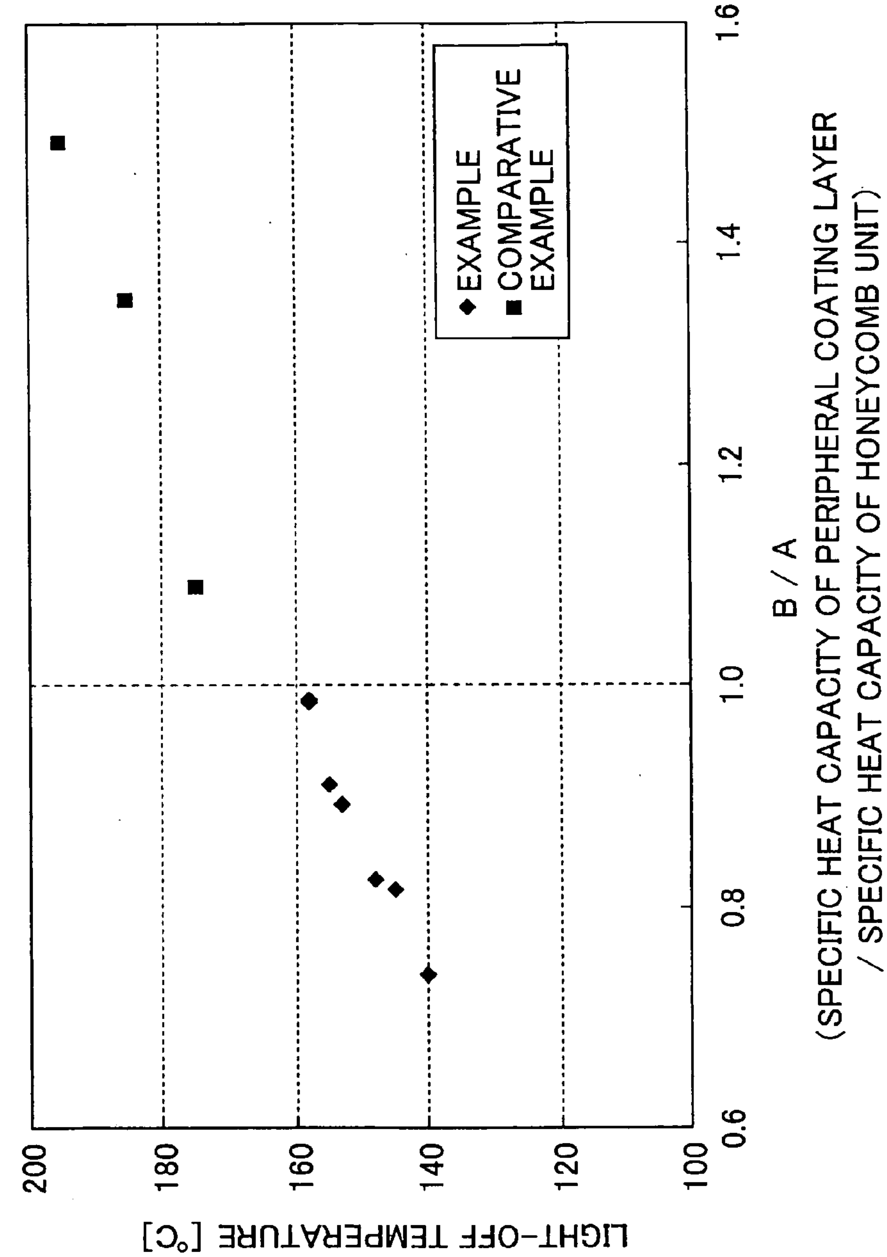
LIGHT-OFF TEMPERATURE [°C]
200
180
160
140
120
100
0.6
0.8
1.0
1.2
1.4
1.6
◆ EXAMPLE
■ COMPARATIVE EXAMPLE
B / A
(SPECIFIC HEAT CAPACITY OF PERIPHERAL COATING LAYER / SPECIFIC HEAT CAPACITY OF HONEYCOMB UNIT)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 06137149 A